# EUROPÄISCHE PATENTANMELDUNG

(11) **EP 4 349 648 A1**
(43) Veröffentlichungstag der Anmeldung: **10.04.2024**
(21) Anmeldenummer: 23192565.2
(22) Anmeldetag: 22.08.2023
(51) Int. Cl.: B60N 2/70, B60N 2/68

(54) **POLSTERAUFBAU EINES FAHRZEUGSITZES MIT FEDERELEMENTEN**

(30) Priorität: 06.10.2022 DE 102022125860
(71) Anmelder: GRAMMER AG, 92289 Ursensollen (DE)
(72) Erfinder: Wegmann, Sebastian, 93059 Regensburg (DE); Pöllinger, Thomas, 93059 Regensburg (DE); Neidl, Christopher, 92546 Schmidgaden (DE)
(74) Vertreter: Hannke Bittner & Partner mbB Regensburg

(57) **Zusammenfassung**

Die Erfindung betrifft einen Fahrzeugsitz, insbesondere für den Schienenverkehr, mit einem Sitzteil, mit einem Rückenlehnenteil und mit einem auf mindestens einer harten Sitzplatte angeordneten weichen Polsterteil zum Polstern einer Sitzfläche des Sitzteils, bei welchem das Polsterteil oberseitig einen Polsterbezug und ein dem Polsterbezug flächendeckend tragendes Polsterschaumteil aufweist, wobei das Polsterschaumteil unterseitig mindestens eine Ausnehmung aufweist, in der eine Mehrzahl von nebeneinander angeordneten hohlzylinderförmig aufgebauten Federelementen aus Schaumstoff eingebettet ist.

## Beschreibung

Die Erfindung betrifft einen Polsteraufbau eines Fahrzeugsitzes mit Federelementen gemäß dem Oberbegriff des Patentanspruches 1.

Fahrzeugsitze mit einem Sitzteil und einer Rückenlehne, die in dem Sitzteil ein Polsterteil aufweisen, welches gefedert ist, sind hinreichend bekannt. Beispielsweise sind derartige Polsterteile in ihrem Polsteraufbau mit zahlreichen Hohlräumen und Ausnehmungen versehen, um dadurch eine federnde Wirkung innerhalb des Polsterteiles zu erhalten. Natürlicherweise ist es bei einem Massenprodukt, wie einem Fahrzeugsitz, erwünscht, dass die eigentliche Federwirkung bereits in dem Polsterteil innerhalb eines dazugehörigen Polsterschaumteiles vorhanden ist, weshalb derartige Ausnehmungen und Aushöhlungen in unterschiedlichster Weise innerhalb des Polsterschaumteiles angebracht werden. Dies kann durchaus auch entlang des Verlaufes der Sitzteilfläche unterschiedlich ausgestaltet sein, jedoch wird angestrebt, dass ein derartiges Polsterschaumteil in einem Arbeitsvorgang geschäumt werden kann, um so die Herstellungskosten zu reduzieren und eine schnelle Produktion von einer Vielzahl von Fahrzeugsitzen durchführen zu können.

Derartig aufgebaute Fahrzeugsitze mit in sich federnden Polsterschaumteilen haben zwar den Vorteil, dass sie mit wenigen Arbeitsschritten hergestellt werden können, jedoch sind die federnden Wirkungen dieser Polsterschaumteile begrenzt, da eine unterschiedliche Federwirkung in unterschiedlichen lokalen Bereichen der Oberfläche des Sitzteiles nur schlecht erreicht werden kann. Dies hängt damit zusammen, dass in einem Polsterschaumteil das Schaumteilmaterial zusammenhängend geschäumt und ausgebildet ist und deshalb bei Betrachtung eines Sitzteiles von oben benachbarte lokale Bereiche mit ihrer Federwirkung stark die lokale Stelle, an der die gewünschte Federwirkung erzielt werden soll, mitbeeinflussen.

Demzufolge ist es Aufgabe der Erfindung, einen Fahrzeugsitz mit einem Sitzteil und einem Rückenlehnenteil sowie einen Polsterteil zur Verfügung zu stellen, welcher es ermöglicht, auf kleinstem Flächenabschnitt an der Oberfläche des Sitzteiles eine individuelle Federfunktion bei Beanspruchung des Sitzteiles durch ein Sitzbenutzer herbeizuführen.

Diese Aufgabe wird gemäß dem Merkmal des Patentanspruches 1 gelöst.

Kerngedanke der Erfindung ist es, dass bei einem Fahrzeugsitz mit einem Sitzteil, mit einem Rückenlehnenteil und mit einem auf mindestens einer Sitzplatte angeordneten Polsterteil zum Polstern einer Sitzfläche des Sitzteils, bei welchem das Polsterteil oberseitig einen Polsterbezug und ein dem Polsterbezug flächendeckend tragendes Polsterschaumteil aufweist, das Polsterschaumteil unterseitig mindestens eine Ausnehmung aufweist, in der eine Mehrzahl von nebeneinander angeordneten hohlzylinderförmig aufgebauten Federelementen aus Schaumstoff eingebettet ist.

Ein solches Gestrick ist vorteilhafterweise mit einer Strickmaschine hergestellt. Diese vorteilhafte Verwendung eines Gestricks erlaubt eine hohe Variabilität bei der Ausgestaltung der Bereiche mit unterschiedlichen Elastizitäten. Derartige Gestricke können vorteilhafterweise sowohl flexible als auch starre, beziehungsweise feste Abschnitte aufweisen. Im Vergleich zu herkömmlichen Webstoffen können Gestricke sehr einfach, kostengünstig und anwendungsspezifisch hergestellt werden.

Ein Gestrick kann durch bestimmte Garne hergestellt werden, wobei bevorzugt das Garn zumindest eine der folgenden Eigenschaften Höchstzugkraft höchstens 60 N, Dehnung höchstens 20% und Material Polyester oder zumindest teilweise aus Polyester gefertigt aufweist.

Ebenso ist es denkbar, dass verschiedene verwendete Gestricke vorliegen, welche unterschiedliche Muster aufweisen können.

Vorteilhaft ist hierbei die Sitzplatte aus hartem in sich eher steifen Material und das Polsterteil eher aus einem weichen Material. Somit ist grundsätzlich ein weiches Polsterteil auf einer harten Sitzplatte angeordnet, jedoch wird innerhalb des dazugehörigen Polsterschaumteiles mit Hilfe einer Ausnehmung innerhalb dieses Schaumteiles die Mehrzahl von nebeneinander angeordneten hohlzylinderförmig aufgebauten Federelementen aus Schaumstoff eingebettet.

Abhängig von dem Durchmesser dieser hohlzylinderförmigen, vorzugsweise aufrechtstehenden und nebeneinander angeordneten Federelemente kann ein beliebig lokal begrenztes, individuelles Federverhalten beziehungsweise eine individuelle Federfunktion bei Beanspruchung des Sitzteils durch ein Sitzbenutzer erreicht werden. Dies geschieht dann unabhängig davon, ob eine ähnliche Federfunktion im benachbarten lokalen Flächenbereich des Sitzteiles gefordert ist oder nicht. Dadurch, dass die einzelnen hohlzylinderförmig ausgebildeten Federelemente nebeneinander angeordnet sind und bevorzugt nicht miteinander verbunden sind, kann individuell jedes hohlzylinderförmige Federelement eine Federfunktion erfüllen, abhängig davon, welche Ausnehmungen oder Aushöhlungen innerhalb des benachbarten Federelementes angeordnet sind. Ein dazu benachbartes hohlzylinderförmiges Federelement kann schon wieder eine komplette andere Federkraft und Federfunktion aufweisen, indem es zum Beispiel ein anderes Material aufweist und/oder andere Ausnehmungen oder dergleichen aufweist. Hierdurch lassen sich individuelle flächenmäßig begrenzte Federungsbereiche erschaffen, die ein hohes Maß an Sitzkomfort zur Verfügung stellen. Beispielsweise können Beckenknochen eines sitzenden Benutzers eine weichere Federfunktion erfahren als davorliegende Oberschenkel, die eher eine härtere Federkraft als Gegenkraft von Seiten des Polsterschaumteiles erfahren sollten.

Trotz der Anordnung der vielen hohlzylinderförmig aufgebauten Federelemente innerhalb einer Ausnehmung des Polsterschaumteiles, welches unterseitig am Polsterschaumteil angeordnet ist, ist vorteilhaft oberseitig eine durchgehende Fläche des Polsterschaumteiles ausgebildet, welche dafür notwendig ist, um den Polsterbezug flächendeckend zu tragen. Der Polsterbezug muss nicht nur eine durchgehende Fläche des Polsterschaumteiles als Grundlage zur Verfügung haben, welches durch einzelne zylinderförmige Federelemente, die nebeneinander in aufrechter Position angeordnet sind, nicht sichergestellt wäre, sondern auch eine Grundstabilität gegen Beschädigungen insbesondere im Bahnbereich innehaben. Zudem ist es wichtig, dass das Polsterschaumteil in seiner gesamten Dicke bevorzugt mindestens doppelt so stark wie die Höhe der Federelemente ist, um so die Dicke der Schicht des Polsterschaumteiles oberhalb der Federelemente genauso stark auszubilden. Dies hat ein gutes Komfortgefühl für den Sitzbenutzer zur Folge. Alternativ kann jedoch diese Gesamtdicke des Polsterschaumteiles geringer als die doppelte Höhe der Federelemente sein, welches bedeutet, dass eine die Federelemente überdeckende Schicht des Polsterschaumteiles in diesem Fall eine geringere Dicke als die Höhe der Federelemente aufweist. Im vorherigen Fall entspricht die Dicke dieser Schicht mindestens der Höhe der aufrechtstehenden hohlzylinderförmigen Federelemente.

Gemäß einer bevorzugten Ausführungsform weisen die hohlzylinderförmig aufgebauten Federelemente, welche vorzugsweise aus Schaumstoff bestehen, Längsachsen auf, die sich senkrecht zu einer Sitzebene des Sitzteils erstrecken. Sofern eine sich unter diesen nebeneinander angeordneten Federelementen erstreckende Sitzplatte eine ebene Oberfläche aufweist, sind sämtliche Längsachsen dieser Federelemente parallel zueinander angeordnet. Selbstverständlich können derartige Federelemente unterschiedliche Höhen aufweisen, um auch unterschiedliche Höhen an der Oberseite des Polsterschaumteiles und dem Polsterbezug zu erschaffen. Beispielsweise könnten die seitlichen Wangenbereiche des Sitzteils beziehungsweise des Polsterteils höher ausgebildet sein als die Bereiche an der Oberseite des Sitzteiles, die mehr mittig angeordnet sind.

Auf diese Weise wird eine komfortablere Sitzposition geschaffen. Dies kann - wie gesagt - durch unterschiedliche Höhen der einzelnen Federelemente und durch ein sich anpassendes sich darüber und seitlich erstreckendem Polsterschaumteil geschehen.

Alternativ können auch sämtliche Federelemente, die zylinderförmig ausgebildet sind, die gleiche Höhe aufweisen und stattdessen die Sitzplatte selber für die Schaffung unterschiedlicher Sitzbereiche an der Oberseite des Sitzteiles unterschiedliche Höhenabschnitte aufweisen. Hierdurch werden die darauf sich befindenden Federelemente unterschiedlich hoch abgestützt. Beispielsweise kann sich die Sitzplatte im seitlichen Bereich, also links und rechts von den Ablagearten der Oberschenkel eines Sitzbenutzers sich nach oben erstrecken und eine höhere Ebene oder schräge Anordnung aufweisen als in dem mittleren Bereich, wo sich die Oberschenkel und der Gesäßbereich des Sitzbenutzers befinden.

Vorzugsweise ist zwischen einer Unterseite des zylinderförmig aufgebauten Federelementes und der Sitzplatte eine sich in Sitzebene des Sitzteils erstreckende Schaummatte angeordnet. Diese sich in Sitzteilbreiten - und Längsrichtung erstreckende Schaummatte kann ebenso mit unterschiedlichen Dicken ausgebildet sein. Alternativ kann sie über ihre gesamte Erstreckung die gleiche Dicke aufweisen. Eine derartige Dicke der Schaummatte kann aus einem Bereich von 0,5 mm - 20 mm, vorzugsweise 1 - 10 mm ausgewählt werden. Die Anordnung dieser Schaummatte dient dazu, die einzelnen zylinderförmigen Federelemente stirnseitig gut positioniert an derjenigen Position zu halten, die flächenmäßig betrachtet für die lokale Federung mit einer vorgesehenen Federkraft vorgesehen ist. Zudem dient die Schaummatte dazu, dass die einzelnen Federelemente aufgrund der häufigen Federbeanspruchung nicht durch die in sich steife oder geringfügig elastisch ausgebildete Sitzplatte aus Hartkunststoff beschädigt oder aufgerieben werden.

Weiterhin wird bevorzugt zwischen den Oberseiten der hohlzylinderförmig aufgebauten Federelemente und der Unterseite des Polsterschaumteils ein Vliesstoff mit einer Schichtdicke aus einem Bereich von 0,05 - 5 mm, vorzugsweise 0,1 - 0,5 mm angeordnet. Diese Vliesschicht dient dazu, dass eine gewisse gleitende Bewegung zwischen der Unterseite des Polsterschaumteiles und Oberseiten der Federelemente vorhanden ist. Dies soll dazu führen, dass die Federelemente, die mit Ihren Stirnseiten der zylinderförmigen Ausbildung nach oben zeigen, sich bei einer Federkraftbeanspruchung beziehungsweise Sitzbelegung nicht zueinander verhaken und anschließend schräg stehen würden. Durch die Anordnung eines Vlieses werden die Stirnseiten und damit die zylinderförmigen Federelemente immer wieder in ihre Ausgangslage zurückbewegt.

Vorteilhaft wird diese Vielzahl von hohlzylinderförmig aufgebauten Federelementen hauptsächlich durch die Anordnung der Ausnehmung innerhalb des Polsterschaumteiles zusammengehalten. Denn aufgrund dieser flächenartig sich ausdehnenden Ausnehmung an der Unterseite des Polsterschaumteiles findet ein seitliches Umranden sämtlicher zylinderförmigen Federelemente statt, weshalb keines dieser zylinderförmigen Federelemente nach oben oder zur Seite hin entweichen kann. Dies ermöglicht eine geordnete Ausrichtung und Anordnung sämtlicher zylinderförmigen Federelemente.

Verstärkt werden kann dieser Zusammenhalt noch durch die Ausbildung der Sitzplatte derart, dass sie einen nach oben sich erstreckenden, die hohlzylinderförmig aufgebauten Federelemente umlaufenden oder diese unterteilenden Randsteg aufweist, der in die mindestens eine Ausnehmung hineinragt. Mit anderen Worten, die Sitzplatte weist aus harten Kunststoffmaterial oder auch beispielsweise Metallmaterial nach oben sich erstreckend einen Außenrand auf, der die Funktion hat, die zylinderförmigen Federelemente zusammenzuhalten. Dies geschieht in Ergänzung zu dem sich nach unten erstreckendem Seitenrande des Polsterschaumteiles.

Um die einzelnen hohlzylinderförmig ausgebildeten Federelemente federnd gestalten zu können, werden sie mit ihrem Schaumstoffmaterial derart gestaltet, dass sie zahlreiche Ausnehmungen und Hohlkammern in verschiedensten Formen und Ausrichtungen aufweisen. Beispielsweise können die Ausnehmungen als Schlitze ausgebildet sein, die sich sowohl in Höhenrichtung der hohlzylinderförmig aufgebauten Federelemente als auch radial in Richtung einer Mittellängsachse eines jeden Federelementes erstrecken. Dies hat zur Folge, dass die Zylinderwände des Federelementes in Höhenrichtung betrachtet mit unterschiedlicher Federwirkung und Federkraft ausgestattet werden können, je nachdem in welche Richtung, mit welchem Ausmaß, mit welchen Abmessungen und in welcher Anzahl derartige Schlitze angeordnet werden.

Jedes hohlzylinderförmig ausgebildete Federelemente weist vorzugsweise eine Höhe aus einem Bereich von 1 - 100 mm, vorzugsweise 5 - 50 mm, noch bevorzugter aus 10 - 30 mm auf.

Ein Außendurchmesser eines jeden hohlzylinderförmig ausgebildeten Federelementes wird aus einem Bereich von 5 - 300 mm, vorzugsweise 10 - 100 mm, noch bevorzugter 30 - 80 mm ausgewählt.

Gemäß einer besonders bevorzugten Ausführungsform wird der Fahrzeugsitz derart ausgestaltet, dass das Sitzteil in Sitzlängsrichtung betrachtet randseitig eine andere Federkraft beziehungsweise einen anderen Federdruck aufweist, als in der Sitzmitte. Dies wird dadurch erreicht, dass die Ausnehmung an dem Polsterschaumteil randseitig im Bereich von abgelegten Oberschenkeln eines Sitzbenutzers Federelemente mit einem höheren Federdruck als Federelemente im sitzteilmittigen Bereich aufweist. Diese unterschiedlichen Federn beziehungsweise Federkräfte, welche zumeist in Längsrichtung der zylinderförmigen Federelemente, also in Höhenrichtung beziehungsweise von oben nach unten oder von unten nach oben betrachtet gesehen werden, können durch bereits beschriebene Ausnehmungen in Form von Schlitzen oder andere Aushöhlungen, durch unterschiedliche Materialzusammensetzungen, durch unterschiedliche Höhen der Zylinder, durch unterschiedliche Wandstärken der hohlzylinderförmigen Elemente etc. erreicht werden.

Weitere vorteilhafte Ausführungen ergeben sich aus den Unteransprüchen.

Es zeigen:
- Fig. 1: in einer perspektivischen Darstellung ein Doppelbahnsitz, wie er für den Gegenstand der vorliegenden Erfindung vorgesehen sein kann;
- Fig. 2: in einer perspektivischen Explosionsdarstellung den Aufbau eines Sitzteils des erfindungsgemäßen Fahrzeugsitzes gemäß dem Gegenstand der vorliegenden Erfindung;
- Fig. 3: in einer perspektivischen Explosionsdarstellung ein Abschnitt 13 gemäß Fig. 2;
- Fig. 3a: ein Federelement;
- Fig. 4: in einer Unteransicht ein Polsterschaumteil von unten betrachtet mit den Federelementen gemäß dem Gegenstand der vorliegenden Erfindung;
- Fig. 5: in einer Querschnittsdarstellung ein Sitzteil des erfindungsgemäßen Fahrzeugsitzes gemäß dem Gegenstand der vorliegenden Erfindung.

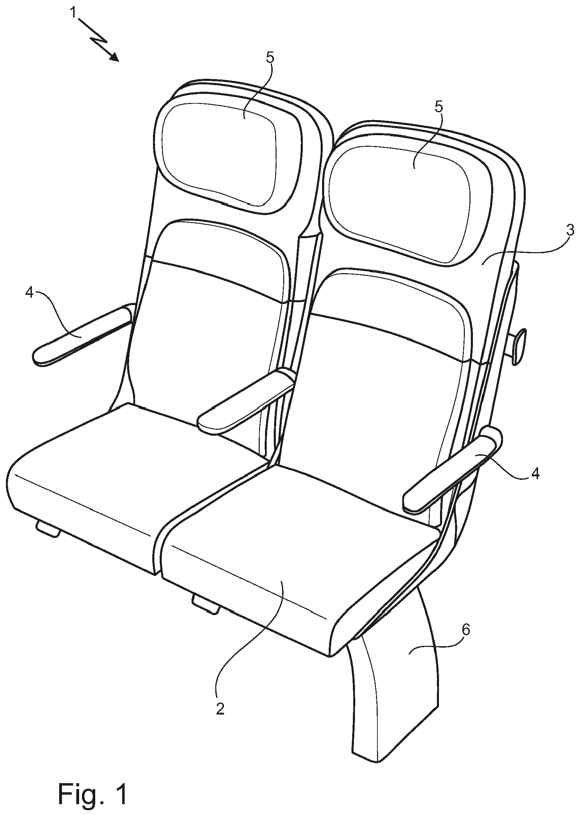

In Figur 1 wird in einer perspektivischen Darstellung ein Doppelbahnsitz dargestellt, der die erfindungswesentlichen Merkmale der vorliegenden Anmeldung aufweisen kann. Ein derartiger Doppelbahnsitz 1 besteht im Wesentlichen aus einem Sitzteil 2, einem Rückenlehnenteil 3, Armlehnen 4, Kopfstützen oder Kopfteilen 5 und einem kantiliverartigen Sitzfuß 6.

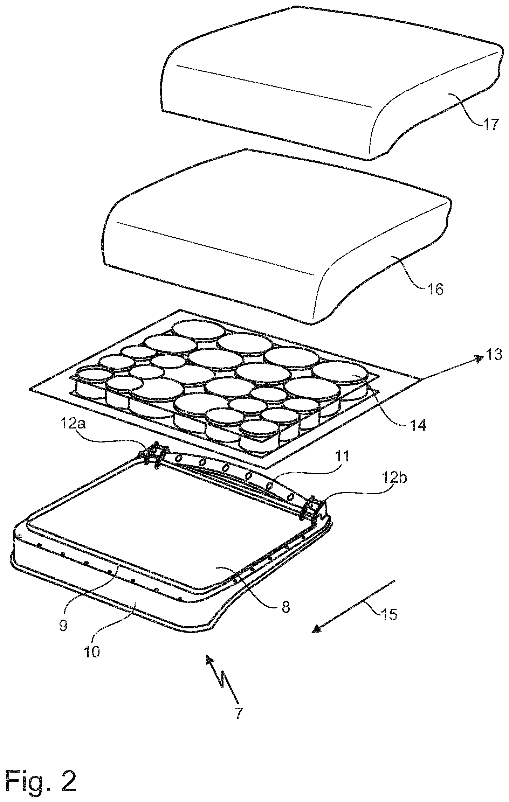

In Figur 2 ist das Sitzteil 2 gemäß dem Gegenstand der vorliegenden Erfindung in Explosionsdarstellung 7 und perspektivischer Darstellung wiedergegeben.

Eine Sitzlängsrichtung oder eine Ausrichtung eines Sitzbenutzers in Längsrichtung des Fahrzeuges wird gemäß dem Pfeil 15 wiedergegeben.

Das Sitzteil 2 in der explosionsartigen Darstellung 7 weist an seiner Unterseite eine Sitzplatte 8 auf, die eine sich nach oben erstreckenden Randbereich 9 aufweist, der stegartig ausgebildet sein kann. Dieser stegartige Randbereich hat zur Aufgabe, Federelemente 14 kontrolliert auf der Sitzplatte mit Hilfe einer noch zu beschreibenden Ausnehmung einer Unterseite eines Polsterschaumteiles 16 festzuhalten, beziehungsweise zu fixieren. Dieser stegartige Randbereich ist auf einer Art Grundplatte 10 mit unterschiedlichen Höhen angeordnet. Sämtliche Sitzplattenteile können aus Hartkunststoff, Metall, oder aus beidem ausgebildet sein.

An zwei daran angeordneten scharnierartigen Vorrichtungen 12a und 12b kann eine Rückenlehne auf einfache Art und Weise eingehängt und schwenkend zu dem Sitzteil 2 bewegt werden. Hierfür ist auch eine Lochleiste 11 vorgesehen, die sich in Querrichtung des Sitzteiles 2 erstreckt und an der dieses Rückenlehnenteil 3 befestigt werden kann.

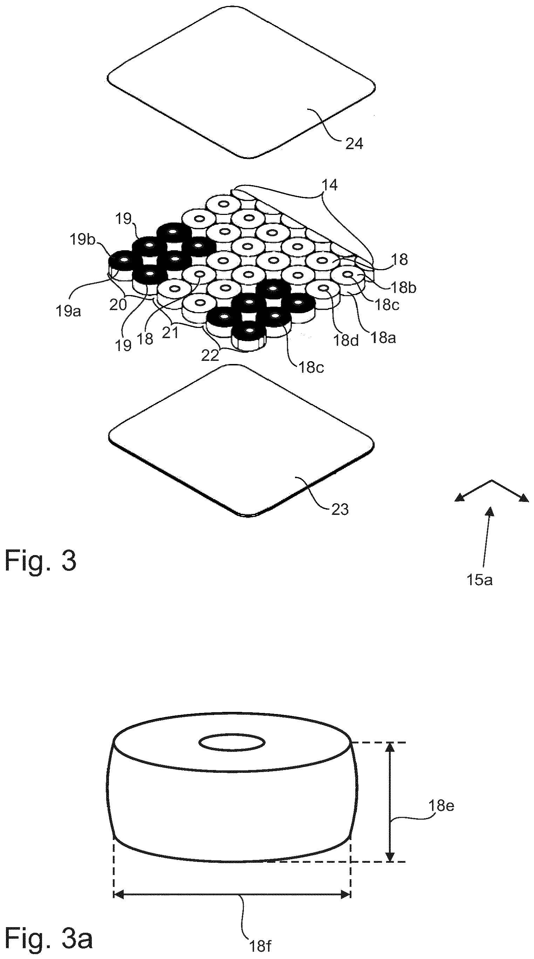

Mit dem Bezugszeichen 13 wird der Abschnitt der Federelemente dargestellt, wie er als komplettes Paket in einer unterseitigen Ausnehmung des Polsterschaumteiles 16 eingebettet und damit verschwinden kann. Dieser Abschnitt 13 besteht aus zylinderförmig ausgebildeten Federelementen, die sich mit ihrer Zylinderlängsachse in Höhenrichtung erstrecken und nebeneinander angeordnet sind. Die Zylinder beziehungsweise die hohlzylinderförmigen Federelemente 14 können unterschiedliche Größen, Stärken, Höhen, etc. aufweisen, um unterschiedliche Federungseffekte an der Oberseite des Sitzteiles 2 zu erreichen. Der Abschnitt 13 wird in Figur 3 noch näher beschrieben.

Das Polsterschaumteil 16 weist die typische Form der Oberseite eines Sitzteiles 2 auf, wie es hinreichend bekannt ist. Dieses Polsterschaumteil 16 wird von vorne nach hinten mit einem Polsterbezug 17 flächendeckend bezogen und dadurch abgedeckt.

In Figur 3 ist der Abschnitt 13 aus Figur 2 in einer Explosionsdarstellung 7 näher wiedergegeben. Dieser Darstellung ist deutlich zu entnehmen, dass die einzelnen hohlzylinderförmigen Federelemente 14 nebeneinander angeordnet sind und oberseitig von einer Vliesschicht 24 und unterseitig von einer Schaummatte 23 abgedeckt werden.

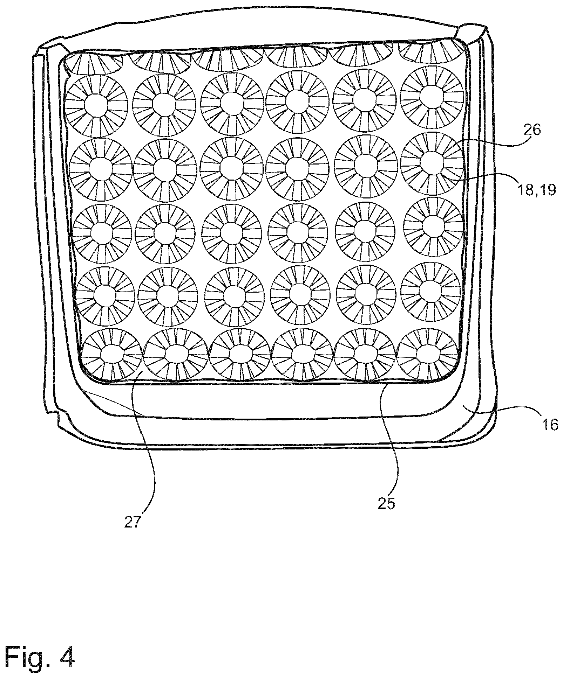

Die hohlzylinderförmig ausgebildeten Federelemente 14 können ebenso aus Schaumstoff bestehen und unterschiedliche Ausnehmungen und Aushöhlungen aufweisen, wie sie beispielsweise in Figur 4 andeutungsweise gezeigt werden. Jedes hohlzylinderförmig ausgebildete Federelement 14 beziehungsweise 18 weist eine Zylinderwand 18b mit seiner Stirnseite und einer Außenfläche 18a auf. Mittig gesehen ist ein Längsloch 18c, welches sich von oben nach unten durch die gesamte zylinderförmige Form erstreckt, angeordnet. Eine Längssachse eines jeden hohlzylinderförmigen Federelementes wird durch das Bezugszeichen 18d dargestellt.

Vorzugsweise können in der Sitzmitte, also zwischen den Ablagebereichen von Oberschenkeln eines Sitzbenutzers, hohlzylinderförmige Federelemente mit einer anderen Federkraft beziehungsweise einem anderen Federdruck angeordnet werden, als in dem Bereich der Ablage der Oberschenkel. Dies wird durch zwei verschiedene farblich dargestellte Federelemente mit dem Bezugszeichen 18 und 19 verdeutlicht. Den Oberschenkeln zugeordnete hohlzylinderförmige Federelemente 19 können eine andere Stirnseite 19b und eine andere Außenseite 19a hinsichtlich der Größe und/ oder der Struktur aufweisen. Beispielsweise können die Zylinderwände 18b und 19b Unterbrechungen in Form von Schlitzen aufweisen, wie sie andeutungsweise in Figur 4 wiedergegeben sind. Bevorzugt unterscheiden sich die Federelemente 18 und 19 bezüglich ihrer unterschiedlichen Federkräfte in ihren Materialien.

Somit sind in den Bereichen 20 und 22 hinsichtlich der Federkraft anders ausgebildete Federelemente als im Bereich 21 angeordnet. Beispielsweise können die drei Bereiche 20, 21 und 22 die gleiche Breite aufweisen. Jedoch könnte auch der Bereich 21 wesentlich breiter ausgebildet sein als die Bereiche 20 und 22. Alternativ können auch die Bereiche 20 und 22 ausschließlich im vorderen Bereich, also in der vorderen Hälfte des Sitzteils 2, von links nach rechts durchgehend angeordnet sein, wohingegen im hinteren Bereich ausschließlich Federelemente gemäß dem Bezugszeichen 18 angeordnet sind.

Die Schaummatte 23, die an der Unterseite angeordnet ist, erstreckt sich gemäß den Pfeilen 15a in x und y Richtung und weist vorzugsweise eine Dicke aus einem Bereich von 0,5 - 20 mm oder vorzugsweise aus einem Bereich von 1 - 10 mm auf. Vorzugsweise wird diese Schaummatte in ihrer flächenhaften Erstreckung mit der gleichen Dicke ausgebildet. Sie kann jedoch auch unterschiedliche Dicken aufweisen.

Die Vliesschicht 24 ist mit einer Dicke aus einem Bereich von 0,1 - 0,5 mm bevorzugt an der Oberseite der vielen Federelemente angeordnet und erstreckt sich über die gesamte Fläche der Federelementerstreckung.

In Figur 3a ist in einer Detailansicht eines der hohlzylinderförmigen Federelemente dargestellt. Diese hohlzylinderförmigen Federelemente weisen Höhen 18e und Durchmesserwerte gemäß 18f auf. Die Höhe 18e kann aus einem Bereich von 1 - 100 mm, vorzugsweise von 5 - 50 mm, noch bevorzugter von 10 - 30 mm ausgewählt werden. Die Außendurchmesser 18f der hohlzylinderförmigen Federelemente werden bevorzugt aus einem Bereich von 5 - 300 mm, vorzugsweise von 10 - 100 mm, noch bevorzugter von 30 - 80 mm ausgewählt.

In Figur 4 wird in einer Unteransicht eine Unterseite der Ausnehmung des Polsterschaumteiles 16 wiedergegeben. Dieses Polsterschaumteil weist einen Rand auf. Der Darstellung ist deutlich zu entnehmen, dass jedes hohlzylinderförmig ausgebildete Federelement schlitzartige Ausbildungen 26 aufweisen kann. Das Polsterschaumteil 16 weist eine Umrandung auf, um hierdurch eine Ausnehmung innerhalb des Polsterschaumteiles bilden zu können. Diese Ausnehmung 25 ist derart ausgebildet, dass verschiedene Federelemente nebeneinander in aufrechter Stellung angeordnet werden können. Diese zylinderförmig ausgebildeten Federelemente bilden Hohlräume 27 zwischen den benachbarten Federelementen.

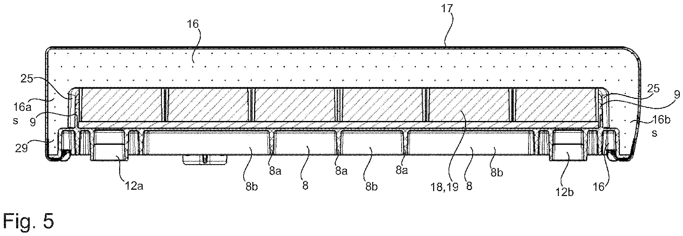

In Figur 5 wird in einer Querschnittsdarstellung ein Sitzteil 2 gemäß dem Gegenstand der vorliegenden Erfindung wiedergegeben. Das Sitzteil 2 weist die bereits vorbeschriebenen Scharniere 12a und 12b auf. Eine Sitzplatte 8 ist derart ausgebildet, dass sie auf Grund von einzelnen Versteifungen 8a einzelne Abschnitte 8b aufweist. An dieser Sitzplatte ist ein sich nach oben erstreckender randseitiger Steg 9 angeordnet, der die Federelemente 18, 19 in geordneter Weise auf der Sitzplatte halten soll und diese umrandet. Selbstverständlich kann dieser Steg 9 nicht nur umlaufend um sämtliche Federelemente herum ausgebildet sein, sondern zusätzlich oder stattdessen auch einzelne Abschnitte innerhalb des Bereiches der Federelemente 18, 19 zur stabilisierenden Positionierung der Federelemente aufweisen.

Seitliche wandartige Bereiche 16a und 16b bilden die Seitenwände der innerhalb des Polsterschaumteiles 16 vorliegenden Ausnehmung 25 und umfassen nicht nur die hohlzylinderförmig aufgebauten Federelemente 18, 19 sondern auch den stegartig ausgebildeten Rand 9 der Sitzplatte 8. Diese seitlichen sich von oben nach unten erstreckenden Bereiche 16a und 16b des Polsterschaumteiles 16 können für eine optimale Positionierung der Sitzplatte in ihrem unteren Bereich eine geringere Wandstärke 29 aufweisen, um so die Sitzplatte innerhalb des Polsterschaumteiles 16 gut positionieren zu können.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Doppelbahnsitz
- 2: Sitzteil
- 3: Rückenlehnenteil
- 4: Armlehnen
- 5: Kopfstützen oder Kopfteilen
- 6: Fuß
- 7: Explosionsdarstellung; explosionsartige Darstellung
- 8: Sitzplatte
- 9: Rand
- 10: Grundplatte
- 11: Lochleiste
- 12a: Scharniere
- 12b: Scharniere
- 13: Ausschnitt
- 14: Federelement
- 15: Sitzlängsrichtung
- 15a: Sitzebene
- 16: Polsterschaumteil
- 16a: Seitenwand
- 16b: Seitenwand
- 17: Polsterbezug
- 18: Federelement
- 18a: Außenfläche
- 18b: Zylinderwand
- 18c: Längsloch
- 18d: Mittellängsachse
- 18e: Höhen
- 18f: Außendurchmesser
- 19: Federelement
- 19a: Außenseite
- 19b: Zylinderwände
- 20: Bereich
- 21: Bereich
- 22: Bereich
- 23: Schaummatte
- 24: Vliesschicht
- 25: Ausnehmung
- 26: keilförmige Schlitze
- 27: Hohlraum
- 29: Wandstärke

## Patentansprüche

1. Fahrzeugsitz (1), insbesondere für den Schienenverkehr, mit einem Sitzteil (2), mit einem Rückenlehnenteil (3) und mit einem auf mindestens einer harten Sitzplatte (8) angeordneten weichen Polsterteil (16, 17) zum Polstern einer Sitzfläche des Sitzteils (2), bei welchem das Polsterteil (16, 17) oberseitig einen Polsterbezug (17) und ein dem Polsterbezug (17) flächendeckend tragendes Polsterschaumteil (16) aufweist, **dadurch gekennzeichnet, dass**
das Polsterschaumteil (16) unterseitig mindestens eine Ausnehmung (25) aufweist, in der eine Mehrzahl von nebeneinander angeordneten hohlzylinderförmig aufgebauten Federelementen (14; 18, 19) aus Schaumstoff eingebettet ist.

2. Fahrzeugsitz (1) nach Anspruch 1,
**dadurch gekennzeichnet, dass**
sich Längsachsen (18d) der hohlzylinderförmig aufgebauten Federelemente (18, 19) senkrecht zu einer Sitzebene (15a) des Sitzteils (2) erstrecken.

3. Fahrzeugsitz (1) nach Anspruch 1 oder 2,
**dadurch gekennzeichnet, dass**
zwischen einer Unterseite der zylinderförmig aufgebauten Federelemente (18, 19) und der Sitzplatte (8) eine sich in Sitzebene (15a) des Sitzteils (2) erstreckende Schaummatte (23) erstreckt.

4. Fahrzeugsitz (1) nach Anspruch 3,
**dadurch gekennzeichnet, dass**
die Schaummatte (23) eine Dicke aus einem Bereich von 0,5 mm - 20 mm, vorzugsweise 1 - 10 mm aufweist.

5. Fahrzeugsitz (1) nach einem der vorangegangenen Ansprüche,
**dadurch gekennzeichnet, dass**
zwischen Oberseiten der hohlzylinderförmig aufgebauten Federelemente (18, 19) und der Unterseite des Polsterschaumteiles (16) eine Vliesschicht (24) mit einer Schichtdicke aus einem Bereich von 0,05 - 5 mm, vorzugsweise 0,1 - 0,5mm, angeordnet ist.

6. Fahrzeugsitz (1) nach einem der vorangegangenen Ansprüche,
**dadurch gekennzeichnet, dass**
Zylinderwände (18b, 19b) der hohlzylinderförmig ausgebildeten Federelemente (18, 19) zahlreiche Ausnehmungen und Hohlkammern aufweisen.

7. Fahrzeugsitz (1) nach Anspruch 6,
**dadurch gekennzeichnet, dass**
die Ausnehmungen als Schlitze (26) ausgebildet sind, die sich sowohl in Höhenrichtung der hohlzylinderförmig aufgebauten Federelemente (18, 19) als auch radial in Richtung einer Mittellängsachse (18d) eines jeden Federelementes (18, 19) erstrecken.

8. Fahrzeugsitz (1) nach einem der vorangegangenen Ansprüche,
**dadurch gekennzeichnet, dass**
jedes hohlzylinderförmig ausgebildete Federelement (18, 19) eine Höhe (18e) aus einem Bereich von 1 - 100 mm, vorzugsweise 5 - 50 mm, noch bevorzugter 10 - 30 mm aufweist.

9. Fahrzeugsitz (1) nach einem der vorangegangenen Ansprüche,
dass jedes hohlzylinderförmig ausgebildete Federelement (18, 19) einen Außendurchmesser (18f) aus einem Bereich von 5 - 300 mm, vorzugsweise 10 - 100 mm, noch bevorzugter 30 - 80 mm aufweist.

10. Fahrzeugsitz (1) nach einem der vorangegangenen Ansprüche,
**dadurch gekennzeichnet, dass**
in Sitzlängsrichtung (15) betrachtet die Ausnehmung (25) randseitig im Bereich (20, 22) von abgelegten Oberschenkeln eines Sitzbenutzers Federelemente (19) mit einem höheren Federdruck als Federelemente (18) im sitzteilmittigen Bereich (21) angeordnet sind.

11. Fahrzeugsitz (1) nach einem der vorangegangenen Ansprüche,
**dadurch gekennzeichnet, dass**
die Sitzplatte (8) mindestens einen nach oben sich erstreckenden, die hohlzylinderförmig aufgebauten Federelemente (18, 19) umlaufenden oder diese unterteilenden Randsteg (9) aufweist, der in die mindestens eine Ausnehmung (25) hineinragt.
